# EUROPÄISCHE PATENTANMELDUNG

(11) **EP 1 092 902 A1**
(43) Veröffentlichungstag der Anmeldung: **18.04.2001**
(21) Anmeldenummer: 00115527.4
(22) Anmeldetag: 19.07.2000
(51) Int. Cl.: F16L 3/10

(54) **Rohrschelle**

(30) Priorität: 14.10.1999 DE 19949483
(71) Anmelder: fischerwerke Artur Fischer GmbH & Co. KG, 72178 Waldachtal (DE)
(72) Erfinder: Schulte, Helmut, 58507 Lüdenscheid (DE)

(57) **Zusammenfassung**

Die Erfindung betrifft eine Rohrschelle (10) mit zwei schwenkbar miteinander verbundenen Schellenbügeln (12, 14), die nach außen stehende Spannflansche (26, 28) an einer Öffnung (16) der Rohrschelle (10) aufweisen, die mittels einer Spannschraube (30) zusammenspannbar sind. Um die Rohrschelle (10) einfach schließen zu können, schlägt die Erfindung ein Gewindeblech (42) auf einem anderen der beiden Spannflansche (28) vor, in das die Spannschraube (30) eingeschraubt ist und das mit einem hakenförmigen Fortsatz (44), der einen zweiten der beiden Schellenbügel (14) durchgreift, schwenkbar mit dem zweiten Schellenbügel (14) verbunden ist. Auf einer Innenseite des zweiten Schellenbügels (14) ist ein Gummiring (46) in den Fortsatz (44) eingehängt, der den Fortsatz (44) nach innen zieht und dadurch das Gewindeblech (42) in Anlage auf den anderen Spannflansch (28) schwenkt. Beim Schließen der Rohrschelle (10) wird dadurch die Spannschraube (30) in einen außen offenen Schlitz (32) des einen Spannflansches (26) hineingedrückt.

## Beschreibung

Die Erfindung betrifft eine Rohrschelle mit den Merkmalen des Oberbegriffs des Anspruchs 1.

Derartige Rohrschellen dienen zum Befestigen von beispielsweise Wasserrohren an einer Wand oder Decke. Sie weisen einen ein eingelegtes Rohr umschließenden Schellenring auf. Dieser kann einstückig sein und sich zum Einlegen des Rohres elastisch und/oder plastisch aufweiten lassen. Auch kann der Schellenring zwei- oder mehrstückig aus Schellenbügeln zusammengesetzt sein, die an einer Stelle des Umfangs des Schellenrings gelenkig miteinander verbunden sind. Mit Abstand von der gelenkigen Verbindungsstelle bzw. beim einstückigen Schellenring an einer Stelle des Umfangs weist der Schellenring eine Öffnung zum Einlegen des Rohres auf, die mit einer Spannschraube verschließbar ist, mit der sich das Rohr in der Rohrschelle festspannen läßt.

Aus der DE 43 27 859 C1 ist eine solche Rohrschelle bekannt, deren Schellenring zur Vereinfachung der Befestigung des Rohres zwei in etwa radial nach außen stehende Spannflansche beiderseits der Öffnung zum Einlegen des Rohres aufweist, die von der Spannschraube durchgriffen und mit der Spannschraube zusammenspannbar sind. Einer der beiden Spannflansche weist einen einseitig offenen Schlitz auf, in den die Spannschraube mit ihrer Kopfseite hineinverschwenkbar ist. Mit ihrem kopfabgewandten, ein Gewinde tragenden Schaftende ist die Spannschraube in ein Gewindeelement eingeschraubt, das schwenkbar auf einer dem einen Spannflansch abgewandten Seite des anderen Spannflansches angebracht ist. Nach Einlegen des Rohres in die geöffnete Rohrschelle werden die beiden Spannflansche durch Zusammendrücken des Schellenrings in seine Öffnung verkleinernder Weise auf einander zu bewegt und die Spannschraube in den Schlitz im einen Spannflansch geschwenkt. Die Rohrschelle ist provisorisch geschlossen und hält das eingelegte Rohr. Durch Anziehen der Spannschraube wird die Rohrschelle festgespannt. Der andere Spannflansch ist mit einem Loch versehen, dessen Abmessung in Schwenkrichtung der Spannschraube so groß ist, daß er das Verschwenken der Spannschraube zuläßt. Das Gewindeelement kann beispielsweise ein Blech mit einer Gewindebohrung oder eine schwenkbar am anderen Spannflansch angebrachte Mutter sein.

Um das Schließen der Rohrschelle zu vereinfachen, ist in der genannten Druckschrift ein Spannband, beispielsweise ein Gummiring, vorgesehen, der das Gewindeelement und den anderen Spannflansch umschließt und auf diese Weise das Gewindeelement elastisch in Anlage an die dem einen Spannflansch abgewandte Seite des anderen Spannflansches drückt. Werden die beiden Spannflansche zum Schließen der Rohrschelle auf einander zu bewegt, drückt der eine Spannflansch den Kopf der Spannschraube nach außen oder auch zur Seite in Richtung des offenen Endes des Schlitzes, d.h. die Spannschraube und das Gewindeelement werden verschwenkt. Sobald der Kopf der Spannschraube den einen Spannflansch überwunden hat, drückt das Spannband das Gewindeelement wieder gegen den anderen Spannflansch und verschwenkt dadurch das Gewindeelement und die Spannschraube so, daß die Spannschraube in den Schlitz schwenkt und den einen Spannflansch durchgreift. Die bekannte Rohrschelle wird also ausschließlich durch Zusammendrücken ihres Schellenrings provisorisch geschlossen, wobei das Spannband dafür sorgt, daß die Spannschraube in jeder räumlichen Lage der Rohrschelle von selbst in den einseitig offenen Schlitz im einen Spannflansch hineinverschwenkt.

Aufgabe der Erfindung ist es, eine derartige Rohrschelle weiter zu verbessern.

Diese Aufgabe wird erfindungsgemäß durch die Merkmale des Anspruchs 1 gelöst. Das Gewindeelement der erfindungsgemäßen Rohrschelle weist einen Fortsatz auf, der den Schellenring durchgreift. Der Fortsatz bildet eine Art Hebel, an ihm greift das elastische Element an und schwenkt das Gewindeelement in Richtung auf den anderen Spannflansch, so daß die Spannschraube in den Schlitz im einen Spannflansch hineinverschwenkt. Der Fortsatz, an dem das elastische Element angreift, hat den Vorteil, daß er frei in seiner Gestaltung ist und so ausgebildet werden kann, daß ein Angriffspunkt des elastischen Elements am Fortsatz günstig für die Wirkung und Beanspruchung des elastischen Elements ist. Des weiteren läßt sich der Fortsatz so anordnen und ausbilden, daß er beim Einlegen eines Rohrs in die Rohrschelle und beim Schließen der Rohrschelle nicht störend im Weg ist.

In bevorzugter Ausgestaltung der Erfindung bildet der Fortsatz des Gewindeelements ein Schwenkgelenk, das das Gewindeelement schwenkbar mit dem Schellenring verbindet. Ein separates Element zum Verbinden des Gewindeelements mit dem Schellenring entfällt dadurch.

Bei einer Ausgestaltung der Erfindung ist das elastische Element ein Spannring, der beispielsweise den Schellenring umgreift oder in sonstiger Weise am Schellenring befestigt und auf einer Innenseite des Schellenrings in den Fortsatz des Gewindeelements eingehängt ist. Der Spannring übt eine Zugkraft auf den Fortsatz des Gewindeelements aus. Insbesondere findet ein Gummiring als Spannring Verwendung.

Bei einer Ausgestaltung der Erfindung ist es vorgesehen, den Spannring auf einer dem Schellenring zugewandten Seite der Spannschraube anzuordnen. Dies hat den Vorteil, daß eine Dehnung des Spannrings beim Verschwenken im Sinne eines Abhebens des Gewindeelements vom anderen Spannflansch gering ist. Dadurch wird ein Reißen des Spannrings vermieden.

Die Erfindung wird nachfolgend anhand eines in der Zeichnung dargestellten Ausführungsbeispiels näher erläutert. Es zeigen:
- Figur 1: eine erfindungsgemäße Rohrschelle in Seitenansicht;
- Figur 2: einen Querschnitt einer gummielastischen Einlage der in Figur 1 dargestellten Rohrschelle; und
- Figur 3: eine vergrößerte Darstellung einer Einzelheit gemäß Pfeil III in Figur 1 in Schnittdarstellung.

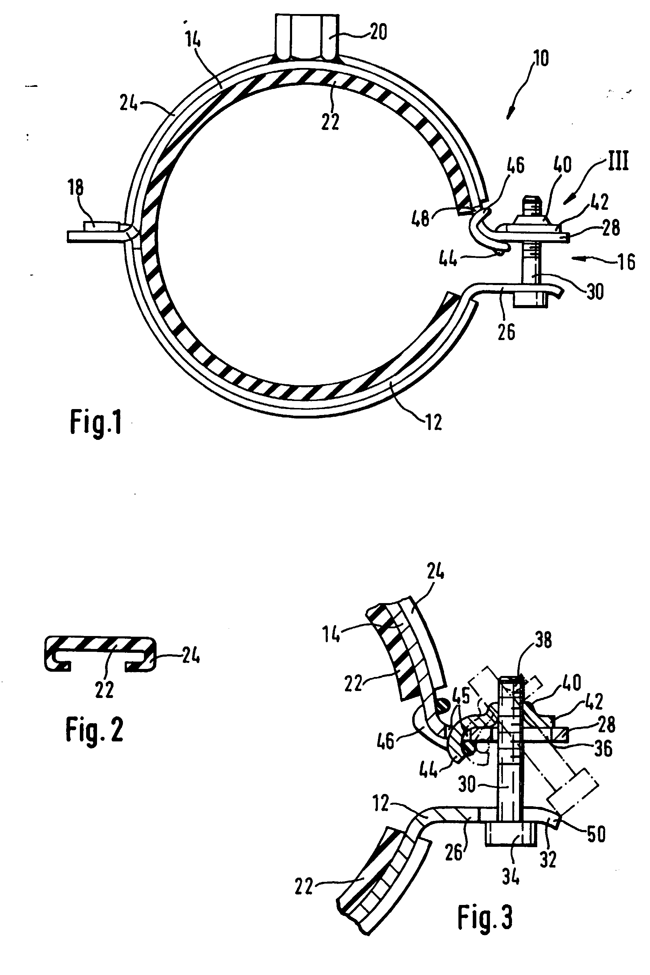

Die in Figur 1 dargestellte, erfindungsgemäße Rohrschelle 10 weist einen Schellenring mit einem ersten Schellenbügel 12 und einem zweiten Schellenbügel 14 auf, die beide jeweils etwas weniger als einen Halbkreisbogen bilden. An einer Stelle ihres Umfangs weist die Rohrschelle 10 eine Öffnung 16 zum Einlegen eines nicht dargestellten Rohres auf. Der Öffnung 16 gegenüber sind die beiden Schellenbügel 12, 14 gelenkig miteinander verbunden, um die Rohrschelle 10 öffnen und das Rohr einlegen zu können. Zur gelenkigen Verbindung weist der erste Schellenbügel 12 eine in Draufsicht T-förmige Zunge 18 auf, die in an sich bekannter Weise eine in der Zeichnung nicht sichtbare Ausstanzung des zweiten Schellenbügels 14 durchgreift.

Beide Schellenbügel 12, 14 sind Blechstanz- und Biegeteile. Etwa in der Mitte des Halbkreisbogens den der zweite Schellenbügel 14 bildet ist eine Mutter 20 zur Befestigung der Rohrschelle 10 an einer Decke oder einer Wand angeschweißt. Auf einer Innenseite der Rohrschelle 10 ist eine gummielastische Einlage 22 angebracht, die sich durchgehend über beide Schellenbügel 12, 14 erstreckt. Zu ihrer Befestigung an der erfindungsgemäßen Rohrschelle 10 weist die in Figur 2 im Querschnitt dargestellte Einlage 22 C-förmige Seitenränder 24 auf, die den Schellenring bildenden Scheuenbügel 12, 14 umgreifen. Der klaren Darstellung wegen ist in Figur 1 der dem Betrachter zugewandte C-förmige Seitenrand 24 der Einlage 22 weggeschnitten.

Beiderseits der Öffnung 16 zum Einlegen eines Rohres weisen die Schellenbügel 12, 14 mit ihnen einstückige Spannflansche 26, 28 auf, die in etwa radial nach außen und näherungsweise parallel zueinander von der Rohrschelle 10 abstehen und von einer Spannschraube 30 durchgriffen werden (Fig. 3). Mit ihrem kopfseitigen Schaftende durchgreift die Spannschraube 30 einen Schlitz 32, der radial verlaufend und außen offen in dem einen Spannflansch 26 angebracht ist, der mit dem ersten Schellenbügel 12 einstückig ist. Ein Kopf 34 der Spannschraube 30 liegt auf einer dem anderen Spannflansch 28 abgewandten Seite des einen Spannflanschs 26 auf.

Ein dem Kopf 34 abgewandtes, ein Gewinde tragendes Schaftende 38 der Spannschraube 30 ragt durch ein Langloch 36 hindurch, das radial verlaufend im anderen Spannflansch 28 angebracht ist, der mit dem zweiten Schellenbügel 14 einstückig ist. Das gewindetragende Schaftende 38 ist lose in ein Innengewinde eingeschraubt, das in einem Kragen 40 eines Gewindeblechs 42 angebracht ist. Das Gewindeblech 42 bildet ein Gewindeelement, es ist auf einer dem einen Spannflansch 26 abgewandten Seite des anderen Spannflanschs 28 angeordnet. Das Gewindeblech 42 weist an einem dem zweiten Schellenbügel 14 zugewandten Rand einen zungenförmigen Fortsatz 44 auf, der ein Stanzloch 45 durchgreift, das im zweiten Schellenbügel 14 angebracht ist. Das Stanzloch 45 befindet sich im Bereich eines Übergangs des anderen Spannflanschs 28 in den zweiten Schellenbügel 14. Der Fortsatz 44 hat in Seitenansicht die Form eines Hakens. Er verbindet das Gewindeblech 42 schwenkbar mit dem zweiten Schellenbügel 14. Das Gewindeblech 42 läßt sich von einer auf dem anderen Spannflansch 28 aufliegenden, in Figur 1 und in Figur 3 mit durchgehenden Linien dargestellte Lage in eine vom anderen Spannflansch 28 abgehobene Lage verschwenken, wie sie in Figur 3 mit Strichlinien dargestellt ist. Zusammen mit dem Gewindeblech 42 verschwenkt die in das Gewindeblech 42 eingedrehte Spannschraube 30 von den Schellenbügeln 12, 14 weg nach außen. In den in Seitenansicht hakenförmigen Fortsatz 44 des Gewindeblechs 42 ist als elastisches Element ein Gummiring 46 auf einer Innenseite des zweiten auf einer Innenseite des zweiten Schellenbügels 14 bzw. auf einer dem einen Spannflansch 26 zugewandten Seite des anderen Spannflanschs 28 eingehängt.

Mit etwas Abstand vom Fortsatz 44 umschlingt der Gummiring 46 den zweiten Schellenbügel 14, der Gummiring 46 liegt in zwei Ausstanzungen 48 ein, die in Seitenrändern des zweiten Schellenbügels 14 angebracht sind. Diese Ausstanzungen 48 halten den Gummiring 46 mit Abstand vom Fortsatz 44. Der Gummiring 46 ist mit einer Vorspannung in die Ausstanzungen 48 im zweiten Schellenbügel 14 und in den hakenförmigen Fortsatz 44 des Gewindeblechs 42 eingehängt. Der Gummiring 46 übt eine Zugkraft auf den Fortsatz 44 des Gewindeblechs 42 aus, die in Bezug auf die Rohrschelle 10 nach Innen gerichtet ist. Über den Fortsatz 44, der eine Art Hebel für den Angriff des Gummirings 46 am Gewindeblech 42 bildet, übt der Gummiring 46 eine Schwenkkraft auf das Gewindeblech 42 aus, die das Gewindeblech 42 in Anlage auf den anderen Spannflansch 28 drückt.

Zur Befestigung eines nicht dargestellten Rohres an einer Wand oder Decke wird die erfindungsgemäße Rohrschelle 10 mittels ihrer Mutter 20 an der Wand oder Decke befestigt. Die Rohrschelle 10 ist zunächst geöffnet, d.h. der Kopf 34 der Spannschraube 30 befindet sich auf einer dem anderen Spannflansch 28 zugewandten Seite des einen Spannflansches 26, die Spannschraube 30 durchgreift den mit dem einseitig offenen Schlitz 32 versehenen einen Spannflansch 26 nicht. Die Schellenbügel 12, 14 lassen sich zum Einlegen des Rohres auseinanderschwenken. Nach Einlegen des Rohres werden die beiden Schellenbügel 12, 14 zusammengedrückt. Dabei nähern sich die Spannflansche 26, 28 einander, der Kopf 34 der Spannschraube 30 stößt gegen den einen Spannflansch 26. Dieser Spannflansch 26, der infolge der gegeneinander verschwenkten Schellenbügel 12, 14 in einem sich radial nach außen öffnenden Winkel zum anderen Spannflansch 28 steht, drückt den Kopf 34 radial nach außen und verschwenkt dadurch die Spannschraube 30 gegen die Kraft des Gummrings 46 radial nach außen (Strichlinien in Figur 3). Der Gummiring 46 wird dabei elastisch gedehnt.

Um das Verschwenken der Spannschraube 30 zu erleichtern, ist ein radial äußeres Ende des einen Spannflansches 26 als Abweiser 50 schräg vom anderen Spannflansch 28 weggebogen. Zusammen mit der Spannschraube 30 verschwenkt das Gewindeblech 42, das schwenkbar am zweiten Schellenbügel 14 angebracht ist. Dabei bietet das Langloch 36 im anderen Spannflansch 28 ausreichend Freiraum für die Schwenkbewegung der Spannschraube 30. Sobald der Kopf 34 der Spannschraube 30 das äußere Ende des einen Spannflansches 26 überwunden hat, zieht der Gummiring 46 den Fortsatz 44 des Gewindeblechs 42 radial nach innen und verschwenkt dadurch das Gewindeblech 42 in Anlage an den anderen Spannflansch 28. Die Spannschraube 30 wird in den außen offenen Schlitz 32 im einen Spannflansch 26 hineingedrückt, so daß der Kopf 34 der Spannschraube 30 diesen Spannflansch 26 übergreift, wie in Figuren 1 und 3 dargestellt. Die erfindungsgemäße Rohrschelle 10 ist dadurch provisorisch geschlossen, sie hält das in sie eingelegte Rohr.

Durch Anziehen der Spannschraube 30 wird das Rohr in der Rohrschelle 10 festgespannt. Die erfindungsgemäße Rohrschelle 10 läßt sich ohne Werkzeug provisorisch schließen. Dazu werden lediglich die beiden Schellenbügel 12, 14 gegeneinandergedrückt. Der Gummiring 46, der das Gewindeblech 42 über dessen Fortsatz 44 in Anlage an den anderen Spannflansch 28 schwenkt, sorgt in jeder Lage der Rohrschelle 10 dafür, daß die Spannschraube 30 in den einseitig offenen Schlitz 32 im einen Spannflansch 26 verschwenkt, sobald der Kopf 34 der Spannschraube 30 das äußere Ende dieses Spannflansches 26 überwunden hat.

## Patentansprüche

1. Rohrschelle mit einem Schellenring, der ein in die Rohrschelle eingelegtes Rohr umgreift und der eine Öffnung zum Einlegen des Rohres an einer Stelle seines Umfangs aufweist, wobei der Schellenring zwei in etwa radial nach außen stehende Spannflansche beiderseits der Öffnung aufweist, die mit einer sie durchgreifenden Spannschraube zusammenspannbar sind, wobei einer der beiden Spannflansche, der sich auf der Seite eines Kopfes der Spannschraube befindet, einen einseitig offenen Schlitz und der andere Spannflansch ein Durchsteckloch aufweist, das von einem gewindetragenden Schaftende der Spannschraube durchgriffen wird und das in Richtung parallel zum einseitig offenen Schlitz eine Abmessung aufweist, die ein Verschwenken der Spannschraube aus dem Schlitz heraus und in den Schlitz hinein ermöglicht, mit einem Gewindeelement, in das die Spannschraube eingeschraubt ist und das schwenkbar auf einer dem einen Spannflansch abgewandten Seite des anderen Spannflansches angebracht ist und mit einem elastischen Element, welches das Gewindeelement in Richtung des anderen Spannflansches schwenkt, **dadurch gekennzeichnet,** daß das Gewindeelement (42) einen Fortsatz (44) aufweist, der den Schellenring (12, 14) durchgreift und der eine Art Hebel bildet, an dem das elastische Element (46) angreift.

2. Rohrschelle nach Anspruch 1, **dadurch gekennzeichnet,** daß der Fortsatz (44) des Gewindeelements (42) das Gewindeelement (42) schwenkbar mit dem Schellenring (12, 14) verbindet.

3. Rohrschelle nach Anspruch 1, **dadurch gekennzeichnet,** daß das Gewindeelement (42) eine Schwenkachse aufweist, die sich im Bereich eines Übergangs vom Schellenring (12, 14) in den anderen Spannflansch (28) befindet.

4. Rohrschelle nach Anspruch 1, **dadurch gekennzeichnet,** daß das elastische Element ein Gummiring (46) ist.

5. Rohrschelle nach Anspruch 4, **dadurch gekennzeichnet,** daß der Gummiring (46) auf einer dem Schellenring (12, 14) zugewandten Seite der Spannschraube (30) angeordnet ist.
